# EUROPEAN PATENT APPLICATION

(11) **EP 2 703 676 A1**
(43) Date of publication of application: **05.03.2014**
(21) Application number: 12777215.0
(22) Date of filing: 26.04.2012
(51) Int. Cl.: F16D 25/12, F16D 25/0638, F16D 25/10

(54) **POWER-TRANSMISSION DEVICE**

(30) Priority: 28.04.2011 JP 2011102059
(71) Applicant: Kabushiki Kaisha F.C.C., Hamamatsu-shi, Shizuoka 431-1394 (JP); Arai Seisakusho Co., Ltd., Tsukuba-shi, Ibaraki 305-0875 (JP); Kaneta Kogyo Co., Ltd., Hamamatsu-shi, Shizuoka 433-8117 (JP)
(72) Inventor: ASATSUKE, Shouji, Hamamatsu-shi Shizuoka 431-1304 (JP); NAGATA, Takumi, Hamamatsu-shi Shizuoka 431-1304 (JP); ISHIMURA, Jun, Hamamatsu-shi Shizuoka 431-1304 (JP); HASHIMOTO, Shuji, Tsukuba-shi Ibaraki 305-0875 (JP); HASEGAWA, Kenichi, Hamamatsu-shi Shizuoka 433-8117 (JP)
(74) Representative: Cohausz & Florack
(86) International application number: PCT/JP2012/061254
(87) International publication number: WO 2012/147868

(57) **Abstract**

One object of the present invention is to provide a power transmitting apparatus which can reduce the gear shifting time lag and thus improve the power transmitting efficiency as well as can easily mount the sealing member to the outer circumference of the input shaft and thus reduce the manufacturing cost of the power transmitting apparatus. According to the present invention there is provided a power transmitting apparatus characterized in that the gear-stage clutch means comprises alternately arranged driving clutch discs and driven clutch discs; a hydraulic piston actuated by hydraulic pressure to selectively engage or disengage the driving clutch discs and driven clutch discs; hydraulic chambers for actuating the hydraulic piston; and hydraulic oil supplying ports communicating with oil passages formed within the input shaft and opening on the side surface of the input shaft for supplying the hydraulic chambers with hydraulic oil from the oil passages to actuate the hydraulic piston; that the power can be transmitted at a predetermined gear ratio with engaging the driving clutch discs with driven clutch discs of the gear-stage clutch means by selectively supplying the hydraulic chambers with hydraulic oil; and that an annular sealing member is fitted in a recessed portion formed around each opening of the hydraulic oil supplying port opened on the outer circumference of the input shaft and the recessed portion has a flattened bottom surface on which the sealing member is seated so that it is contacted with the flattened bottom surface of the recessed portion.

## Description

### Field of the Invention

The present invention relates to a power transmitting apparatus arranged on the way of a power transmitting path between an engine and driving wheels and adapted to connect an input from an input shaft of the engine side and an output to the driving wheel side at predetermined gear ratio and to arbitrarily set the gear ratio during power transmission from the engine to the wheels in accordance with running conditions of a vehicle.

### Description of Background Art

As power transmitting apparatus for selectively transmit or cut off the driving power of an engine to wheels of vehicle, there are two types of transmissions such as a manual transmission (MT) of its speed shifting operation being manually carried out and an automatic transmission (AT) of its speed shifting operation being automatically carried out by a torque converter. Although the AT can easily achieve the speed shifting operation it has a fault of wrong in power transmitting efficiency. Accordingly, it has been proposed an AMT type power transmitting apparatus which can automatically perform the speed shifting operation without using the torque converter.

Such an AMT type power transmitting apparatus comprises a start/speed shifting clutch means for transmitting or cutting off the power transmitting path between an engine and wheels, and a plurality of gear-stage clutch means of which input and output being set at a predetermined gear ratio. The gear-stage clutch means comprises a synchronizing mechanism and a dog clutch and is formed so that the gear ratio during power transmission from an engine to wheels can be arbitrarily set by selectively connect the dog clutch to any one of gear-stage clutch means.

However, there is a problem that the speed shifting time lag would become large in the power transmitting apparatus of the prior art since the gear ratio is set by selecting an arbitral gear-stage with use of a synchronizing mechanism and a dog clutch forming the gear-stage clutch means. Accordingly the applicant of the present application has devised a power transmitting apparatus comprising driving clutch discs and driven clutch discs alternately laminated each other, and a hydraulic piston for selectively actuating the driving clutch discs and driven clutch discs to engage and disengage them so that a driving power can be transmitted at a predetermined gear ratio when the driving clutch discs and driven clutch discs are engaged.

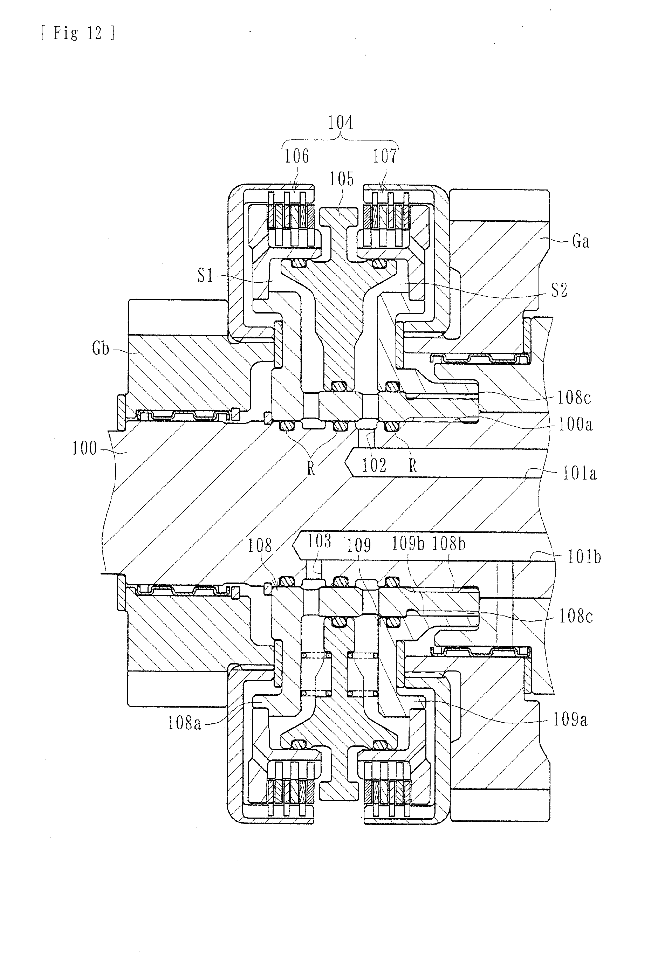

For example it has been proposed a power transmitting apparatus shown in Fig. 12 comprising a clutch means 104 formed of clutch disc groups 106, 107 arranged side by side each other for transmitting the driving power at different gear ratios (i.e. based on gears Ga, Gb of different diameters) and a hydraulic piston 105 arranged between the clutch disc groups 106, 107. The engagement of driving clutch discs and driven clutch discs of the clutch disc group 106 can be achieved by supplying an oil passage 101a formed within an input shaft 100 with hydraulic oil and leading the hydraulic oil to a hydraulic chamber S2 through a hydraulic oil supplying port 102 to move a hydraulic piston 105 toward the left in Fig. 12. On the contrary, the engagement of driving clutch discs and driven clutch discs of the clutch disc group 107 can be achieved by supplying an oil passage 101b formed within the input shaft 100 with hydraulic oil and leading the hydraulic oil to a hydraulic chamber S1 through a hydraulic oil supplying port 103 to move a hydraulic piston 105 toward the right in Fig. 12.

In the power transmitting apparatus of the prior art shown in Fig. 12, since two hydraulic oil supplying ports 102, 103 are formed in the input shaft 100 along its longitudinal direction, three sealing members R such as O-rings are required for sealing the hydraulic oil supplying ports 102, 103. Accordingly, there is caused a problem that the longitudinal dimension of the input shaft 100 and accordingly of the power transmitting apparatus is increased. In addition, the longitudinal dimension of the power transmitting apparatus is further increased by provision of a spline 100a on the input shaft 100 for connecting the input shaft 100 and the driving clutch discs and the driven clutch discs respectively of the clutch disc groups 106, 107.

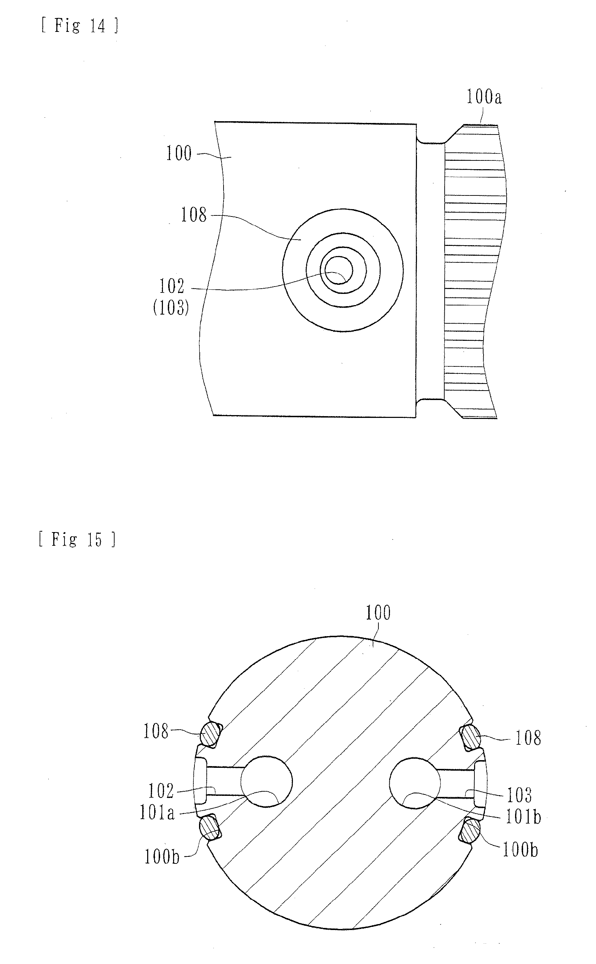

For solving the problems of the power transmitting apparatus of the prior art described above, the applicant of the present application has proposed a power transmitting apparatus as shown in Figs. 14 and 15 in which a plurality of hydraulic oil supplying ports 102, (103) are formed on the same plane of a radial cross-section of the input shaft 100 and a sealing member 108 such as an O-ring is arranged on the circumference of the input shaft 100 around each of the hydraulic oil supplying ports 102, (103). In this case, the sealing member 108 is fitted in a circular groove 100b formed around each of the hydraulic oil supplying ports 102, (103). Since such a structure is not a known invention disclosed in any document, there is no document information of the prior art to be mentioned here.

### Disclosure of the Invention

### Problems to be solved by the Invention

However in the power transmitting apparatus described above, since there is formed on the outer circumference of the input shaft 100 around the hydraulic oil supplying port 102 (103) an annular groove 100b into which the sealing member 108 is press-fitted, following problems are caused.
That is, since the annular groove 100b arranged around each hydraulic oil supplying port 102 (103) is formed as having a curved bottom surface substantially parallel with the outer circumference of the input shaft 100, a complicated machining technology such as a so-called three-dimensional machining in which a cutting tool should be operated in accordance with a three-dimensional motion is required. This increases the manufacturing cost of the power transmitting apparatus. In addition, it is also necessary in this case that the sealing member (e.g. O-ring) 108 should be formed as having a curved bottom surface same as that of the circular groove 100b. This also increases the manufacturing cost of the power transmitting apparatus. Such a problem is not limited only to the structure of the prior art in which a plurality of hydraulic oil supplying ports are arranged on a same plane of a radial cross-section of the input shaft 100 and would be caused in a structure in which a plurality of hydraulic oil supplying ports are arranged in an axial direction of a shaft if it has sealing members such as O-rings mounted around the hydraulic oil supplying ports on the outer circumference of a shaft.

It is therefore an object of the present invention to provide a power transmitting apparatus which can reduce the gear shifting time lag and thus improve the power transmitting efficiency as well as can easily mount the sealing member to the outer circumference of the input shaft and thus reduce the manufacturing cost of the power transmitting apparatus.

### Means for solving problems

For achieving the object mentioned above, there is provided, according to the present invention of claim 1, a power transmitting apparatus comprising a gear-stage clutch means arranged on the way of a power transmitting path between an engine and driving wheels, an input from an input shaft of the engine side and an output to the driving wheel side being set at a predetermined gear ratio; and a gear-stage selecting means being able to select any one of the gear ratios of the gear-stage clutch means in accordance with the running condition of a vehicle and to arbitrarily set the gear ratio during power transmission from the engine to the wheels characterized in that the gear-stage clutch means comprises alternately arranged driving clutch discs and driven clutch discs; a hydraulic piston actuated by hydraulic pressure to selectively engage or disengage the driving clutch discs and driven clutch discs; hydraulic chambers for actuating the hydraulic piston; and hydraulic oil supplying ports communicating with oil passages formed within the input shaft and opening on the side surface of the input shaft for supplying the hydraulic chambers with hydraulic oil from the oil passages to actuate the hydraulic piston; that the power can be transmitted at a predetermined gear ratio with engaging the driving clutch discs with driven clutch discs of the gear-stage clutch means by selectively supplying the hydraulic chambers with hydraulic oil; and that an annular sealing member is fitted in a recessed portion formed around each opening of the hydraulic oil supplying port opened on the outer circumference of the input shaft and the recessed portion has a flattened bottom surface on which the sealing member is seated so that it is contacted with the flattened bottom surface of the recessed portion.

The present invention of claim 2 is a power transmitting apparatus of claim 1 wherein the annular sealing member has a flattened bottom surface adapted to be contacted with the flattened bottom surface of the recessed portion and a curved top surface having a curvature corresponding to that of the outer circumference of the input shaft.

The present invention of claim 3 is a power transmitting apparatus of claim 1 or 2 wherein the sealing member has an outline configuration or a projection for preventing rotation of the sealing member relative to the recessed portion.

The present invention of claim 4 is a power transmitting apparatus of any one of claims 1 ∼ 3 wherein the input shaft is formed with a splined portion able to be engaged with partition members for forming the hydraulic chambers and a non-splined portion in which the opening of the hydraulic oil supplying port is formed, and wherein the splined portion and the non-splined portion are formed on the same plane of a radial cross-section of the input shaft.

The present invention of claim 5 is a power transmitting apparatus of any one of claims 1-4 wherein a plurality of the hydraulic oil supplying ports are formed on the same plane of a radial cross-section of the input shaft.

### Effects of the Invention

According to the present invention of claim 1, since an annular sealing member is fitted in a recessed portion formed around each opening of the hydraulic oil supplying port opened on the outer circumference of the input shaft and the recessed portion has a flattened bottom surface on which the sealing member is seated so that it is contacted with the flattened bottom surface of the recessed portion, it is possible to assemble the sealing member arranged around the opening of the hydraulic oil supplying port to the recessed portion formed in the outer circumference of the input shaft and thus to reduce the manufacturing cost of the power transmitting apparatus.

According to the present invention of claim 2, since the annular sealing member has a flattened bottom surface adapted to be contacted with the flattened bottom surface of the recessed portion and a curved top surface having a curvature corresponding to that of the outer circumference of the input shaft, it is possible to easily mold the sealing member, to smoothly assemble the sealing member to the recessed portion and to surely achieve sealing by the sealing member.

According to the present invention of claim 3, since the sealing member has an outline configuration or a projection for preventing rotation of the sealing member relative to the recessed portion, it is possible to surely keep the sealing by the sealing member.

According to the present invention of claim 4, since the input shaft is formed with a splined portion able to be spline-engaged with partition members for forming the hydraulic chambers and a non-splined portion in which the opening of the hydraulic oil supplying port is formed, and the splined portion and the non-splined portion are formed on the same plane of a radial cross-section of the input shaft, it is possible to further reduce the axial dimension (i.e. height) of the power transmitting apparatus and thus the total size thereof.

According to the present invention of claim 5, since a plurality of the hydraulic oil supplying ports are formed on the same plane of a radial cross-section of the input shaft, it is possible to further reduce the axial dimension of the input shaft of the power transmitting apparatus as compared with that of that of the power transmitting apparatus having a plurality of hydraulic oil supplying ports arranged in the axial direction.

### Brief Description of the Drawings

[Fig.1] A diagrammatic view showing a whole structure of a vehicle to which the power transmitting apparatus of the present invention is applied;
[Fig.2] A longitudinal sectional view showing the power transmitting apparatus of the present invention;
[Fig. 3] An exploded longitudinal sectional view showing a first partition member, a second partition member, a hydraulic piston etc.;
[Fig. 4] A partially enlarged view showing a region near hydraulic oil supplying ports of the input shaft of the power transmitting apparatus of the present invention;
[Fig. 5] A cross-sectional view taken along a line V-V in Fig. 4;
[Fig. 6] A side elevation view and a plan view showing a sealing member of the power transmitting apparatus of the present invention;
[Fig. 7] A cross-sectional view showing a recessed portion formed on an input shaft of the power transmitting apparatus of the present invention;
[Fig. 8] A plan view showing a recessed portion formed on an input shaft of the power transmitting apparatus of the present invention;
[Fig. 9] A cross-sectional view showing a recessed portion formed on an input shaft of the power transmitting apparatus of another embodiment of the present invention;
[Fig. 10] A side elevation view and a plan view showing a sealing member of the power transmitting apparatus of another embodiment of the present invention;
[Fig. 11] A plan view showing a condition in which the sealing member is mounted in the recessed portion of the input shaft;
[Fig. 12] A longitudinal sectional view showing a power transmitting apparatus of the prior art;

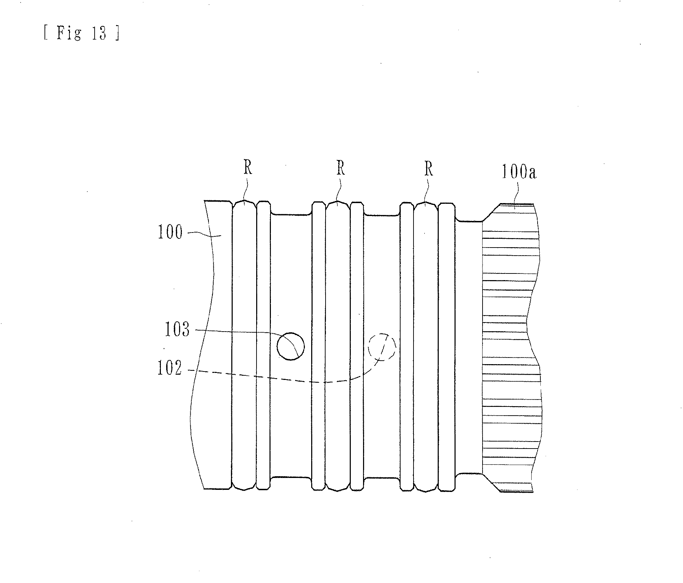

[Fig. 13] A plan view showing a hydraulic oil supplying port of the power transmitting apparatus of the prior art;
[Fig. 14] A plan view showing a condition in which a sealing member is mounted on an input shaft of a power transmitting apparatus of another embodiment of the prior art; and
[Fig. 15] A cross-sectional view showing the condition of Fig. 14.

### Preferable modes for carrying out the Invention

Preferable embodiments of the present invention will be described with reference to accompanied drawings.

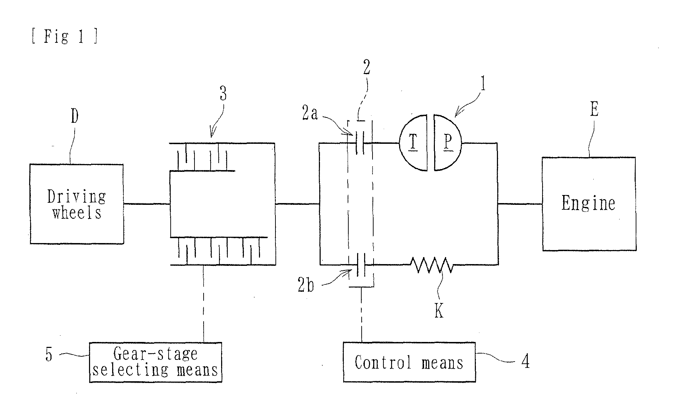

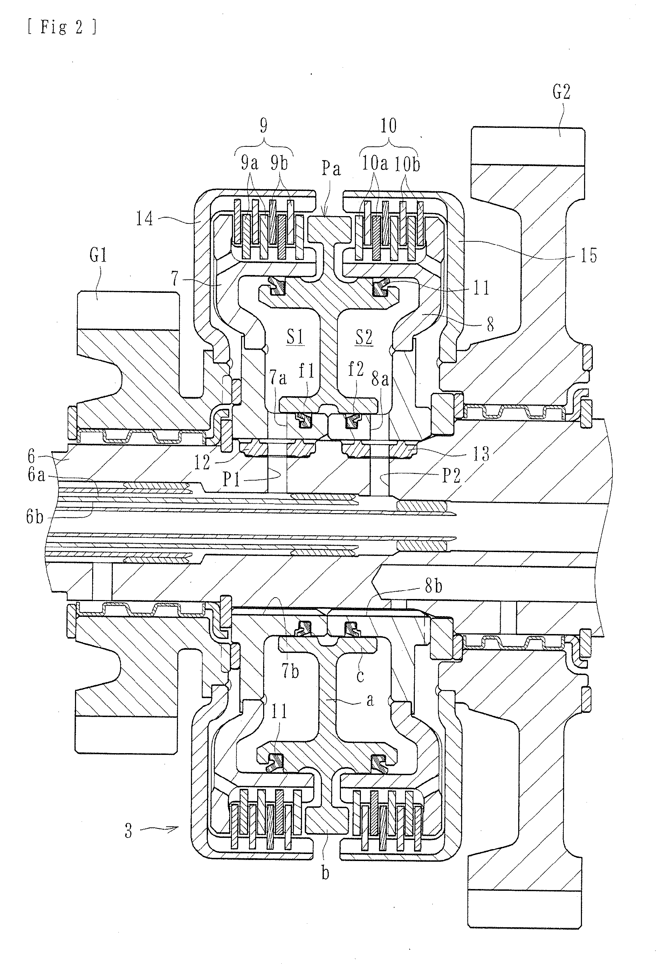

The power transmitting apparatus of the present invention is intended to transmit or cut off the driving power of an engine (driving source) E of an automobile (vehicle) to or from the wheels (driving wheels) D and mainly comprises, as shown in Figs. 1 and 2, a torque converter 1, a start/speed shifting clutch means 2, a gear-stage clutch means 3, a control means 4, and a gear-stage selecting means 5. As shown in Fig.1, the torque converter 1, the start/speed shifting clutch means 2 and the gear-stage clutch means 3 are arranged on the way of a power transmitting path from the engine E to wheels (driving wheels) D.

The torque converter 1 has a torque amplifying function for amplifying the torque from the engine E and transmitting it to the driving wheels D and mainly comprises a torque converter cover (not shown) rotated around its shaft by the driving force transmitted from the engine E and tightly containing liquid (operating oil), a pump P formed on the side of the torque converter cover, and a turbine T arranged oppositely to the pump P and rotatable at the side of the torque converter cover.

When the torque converter cover and the pump P are rotated by the driving force of the engine E, the rotational torque is transmitted to the turbine T through the liquid (operating oil) with the torque being amplified. When the turbine T is then rotated by the amplified torque, a the first driving shaft spline-fitted with the turbine T is rotated and thus amplified torque is transmitted to the driving wheels D through the gear-stage clutch means 3. Thus the power transmitting apparatus of the present invention has a driving power transmitting path (a power transmitting path of torque converter) comprising the torque converter cover, the pump P and the turbine T.

On the other hand the torque converter cover is connected to a predetermined connecting member (not shown) through the damper mechanism K comprising coil springs and the connecting member is further fitted with a predetermined driving shaft (second driving shaft) via an input shaft 6. Accordingly the torque converter cover, the connecting member and the second driving shaft are rotated by the driving power of the engine E, and thus the driving torque of the engine E is transmitted to the gear-stage clutch means 3. That is, the second driving shaft enables to transmit the driving power of the engine E to the driving wheels D without through the power transmitting path of the torque converter 1.

As described above the first driving shaft can be rotated by the driving power of the engine E via the power transmitting path of the torque converter 1 and connected to the first clutch means 2a of the start/speed shifting clutch means 2, and the second driving shaft can be directly rotated by the driving power of the engine E without through the power transmitting path of the torque converter 1 and be connected to the second clutch means 2b of the start/speed shifting clutch means 2.

The start/speed shifting clutch means 2 is intended to transmit or cut off the driving power of the engine E to or from the driving wheels D at an arbitral timing and comprises the first clutch means 2a for transmitting the driving power of the engine E to the driving wheels D through the power transmitting path of the torque converter 1 and a second clutch means 2b for transmitting the driving power of the engine E to the driving wheels D without through the power transmitting path of the torque converter 1. The first and second clutch means 2a, 2b can be formed by multiple disc clutches.

The control means 4 can control the hydraulic oil pressure supplied to each gear-stage clutch means 3 and is configured to selectively operate the first and second clutch means 2a, 2b in accordance with conditions of vehicle. Similarly to the gear-stage selecting means 5 described later, the control means 4 may be formed for example by a microcomputer loaded on a vehicle. The gear-stage clutch means 3 is arranged between the start/speed shifting clutch means 2 and the driving wheels D on the way of the power transmitting path and its input (rotational speed of the start/speed shifting clutch means) and output (rotational speed of the driving wheels) are set at predetermined ratios.

More particularly, the gear-stage clutch means 3 of the present invention is mounted to the input shaft 6 as shown in Fig. 2. The gear-stage clutch means 3 mainly comprises a first partition member 7, a second partition member 8, a first clutch disc group 9, a second clutch disc group 10, and a hydraulic piston Pa. Gears G1, G2 have different diameters and are able to transmit the driving power to an output shaft (a shaft formed with gears mating with the gears G1, G2 and connected to the driving wheels D; not shown). A plurality of the gear-stage clutch means (not shown) other than the gear-stage clutch means 3 which are able to transmit driving power to the gears G1, G2 at desirable gear ratios are arranged in the power transmitting apparatus of the present invention.

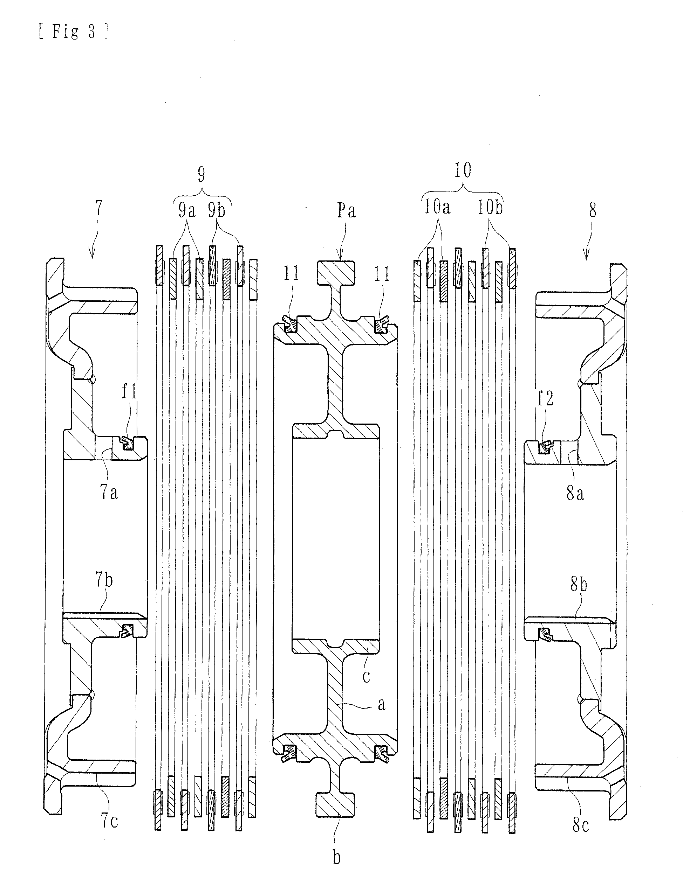

The first partition member 7 is spline-fitted onto the input shaft 6 so as to be rotated together with the input shaft 6 and forms a hydraulic chamber S1 cooperating with the hydraulic piston Pa. More particularly, the first partition member 7 is formed with a through aperture on which a spline 7b is formed so as to be engaged with the spline formed on the input shaft 6 as shown in Fig. 3. A reference numeral 7a denotes a hydraulic oil supplying aperture through which the operating oil can be supplied to the hydraulic chamber S1. In addition, a reference numeral 7c denotes a spline on which driving clutch discs 9a forming the first clutch disc group 9 are fitted.

The second partition member 8 is spline-fitted onto the input shaft 6 so as to be rotated together with the input shaft 6 and forms a hydraulic chamber S2 cooperating with the hydraulic piston Pa. More particularly, the second partition member 8 is formed with a through aperture on which a spline 8b is formed so as to be engaged with the spline formed on the input shaft 6 as shown in Fig. 3. A reference numeral 8a denotes a hydraulic oil supplying aperture through which the operating oil can be supplied to the hydraulic chamber S2. In addition, a reference numeral 8c denotes a spline on which driven clutch discs 10a forming the second clutch disc group 10 are fitted.

Thus, the first and second partition members 7, 8 are spline-fitted onto the input shaft 6 and arranged oppositely to each other to form the hydraulic chambers S1, S2 with sandwiching the hydraulic piston Pa between the first and second partition members 7, 8. Reference numerals f1, f2 denote sealing members mounted respectively on the first and partition members 7, 8.

The first clutch disc group 9 comprises alternately laminated driving clutch discs 9a spline-fitted onto the spline 7c of the first partition member 7 and driven clutch discs 9b spline-fitted onto the output side (i.e. an output member 14 connected to the gear G1). When the driving clutch discs 9a and driven clutch discs 9b are engaged by actuation of the hydraulic piston Pa, driving power of the input shaft 6 can be transmitted to the gear G1, on the contrary, when the driving clutch discs 9a and driven clutch discs 9b are disengaged by releasing actuation of the hydraulic piston Pa, driving power of the input shaft 6 cannot be transmitted to the gear G1. The term "disengage" used herein means a condition released from the pressure applied to the clutch discs and thus is not limited only to physically separated condition.

The second clutch disc group 10 comprises alternately laminated driving clutch discs 10a spline-fitted onto the spline 8c of the second partition member 8 and driven clutch discs 10b spline-fitted onto the output side (i.e. an output member 15 connected to the gear G2). When the driving clutch discs 10a and driven clutch discs 10b are engaged by actuation of the hydraulic piston Pa, driving power of the input shaft 6 can be transmitted to the gear G2, on the contrary, when the driving clutch discs 10a and driven clutch discs 10b are disengaged by releasing actuation of the hydraulic piston Pa, driving power of the input shaft 6 cannot be transmitted to the gear G2.

The hydraulic piston Pa can be operated by hydraulic oil supplied to either one of the hydraulic chamber S1, S2 and selectively engage or disengage the driving clutch discs (9a, 10a) and the driven clutch discs (9b, 10b) of the first or second clutch disc groups 9 or 10 in accordance with the displaced direction of the hydraulic piston Pa. As shown in Fig. 3, the hydraulic piston Pa of the present invention comprises a hydraulic pressure receiving portion "a" positioned within the hydraulic chambers S1, S2 for receiving the hydraulic pressure, an actuating portion "b" integrally formed with the hydraulic pressure receiving portion "a" for engaging and disengaging the driving clutch discs (9a, 10a) and the driven clutch discs (9b, 10b) of the first clutch disc group 9 and the second clutch disc group 10, a sliding portion "c" provided with sealing members f1, f2 and slidable relative to the first and second partition members 7, 8, and sealing means 11 for sealing the hydraulic chambers S1, S2.

The hydraulic chambers S1, S2 are sealed from each other by the sealing means 11 mounted on the hydraulic piston Pa and seal members f1, f2 mounted respectively on the first partition member 7 and the second partition member 8. Although it is shown in the illustrated embodiment that the sealing means 11 and the sealing members f1, f2 are those having lips, it may be possible to use other types of seals such as O-rings or gaskets.

When a hydraulic pressure is applied to the hydraulic chamber S2 by supplying hydraulic oil thereto, the hydraulic piston Pa is moved toward the left and the actuating portion "b" of the hydraulic piston Pa presses the first clutch disc group 9 and engages the driving clutch discs 9a and driven clutch discs 9b. Accordingly, the driving power of the engine E can be transmitted to the output member 14 and thus driving power corresponding to the gear ratio determined by the gear G1 can be transmitted. On the contrary, when a hydraulic pressure is applied to the hydraulic chamber S1 by supplying hydraulic oil thereto, the hydraulic piston Pa is moved toward the right and the actuating portion "b" of the hydraulic piston Pa presses the second clutch disc group 10 and engages the driving clutch discs 10a and driven clutch discs 10b. Accordingly, the driving power of the engine E can be transmitted to the output member 15 and thus driving power corresponding to the gear ratio determined by the gear G2 can be transmitted.

It may be possible to arrange any urging means (e.g. return springs etc.) for returning the hydraulic piston Pa to its initial position (neutral position) by urging force when the pressure applied to the hydraulic piston Pa is released by stopping supply of hydraulic oil to the hydraulic chambers S1, S2. When the hydraulic piston Pa is returned to the initial position, the driving clutch discs (9a,10a) and the driven clutch discs (9b, 10b) are disengaged and the power transmission can be cut off.

As described above, the driving power of the engine E can be transmitted to the driving wheels D at a desired gear ratio by selectively moving the hydraulic piston Pa to the right or left direction by selectively supplying hydraulic oil to the hydraulic chamber S1 or S2. Since the hydraulic piston Pa can be commonly used for changing the gear ratio, it is possible to reduce the size (especially in the axial size), the number of parts and thus cost of the power transmitting apparatus.

The input shaft 6 of the present invention is formed with oil passages 6a, 6b axially extending in the input shaft 6 toward a hydraulic pressure source (not shown), and hydraulic oil supplying ports P1, P2 radially branched respectively from the oil passages 6a, 6b toward the hydraulic chambers S1, S2 (particularly, hydraulic oil supplying apertures 7a, 8a). That is, the hydraulic oil supplying port P1 is communicated with the hydraulic chamber S1 via the hydraulic oil supplying aperture 7a formed in the first partition member 7 and the hydraulic oil supplying port P2 is communicated with the hydraulic chamber S2 via the hydraulic oil supplying aperture 8a formed in the second partition member 8.

Thus, the hydraulic piston Pa can be moved toward the right direction in Fig. 2 by supplying hydraulic oil to the hydraulic chamber S1 through the oil passage 6a and the hydraulic oil supplying port P1 and applying hydraulic pressure onto the left-side surface of the hydraulic pressure receiving portion "a", and the hydraulic piston Pa can be moved toward the left direction in Fig. 2 by supplying hydraulic oil to the hydraulic chamber S2 through the oil passage 6b and the hydraulic oil supplying port P2 and applying hydraulic pressure onto the right-side surface of the hydraulic pressure receiving portion "a".

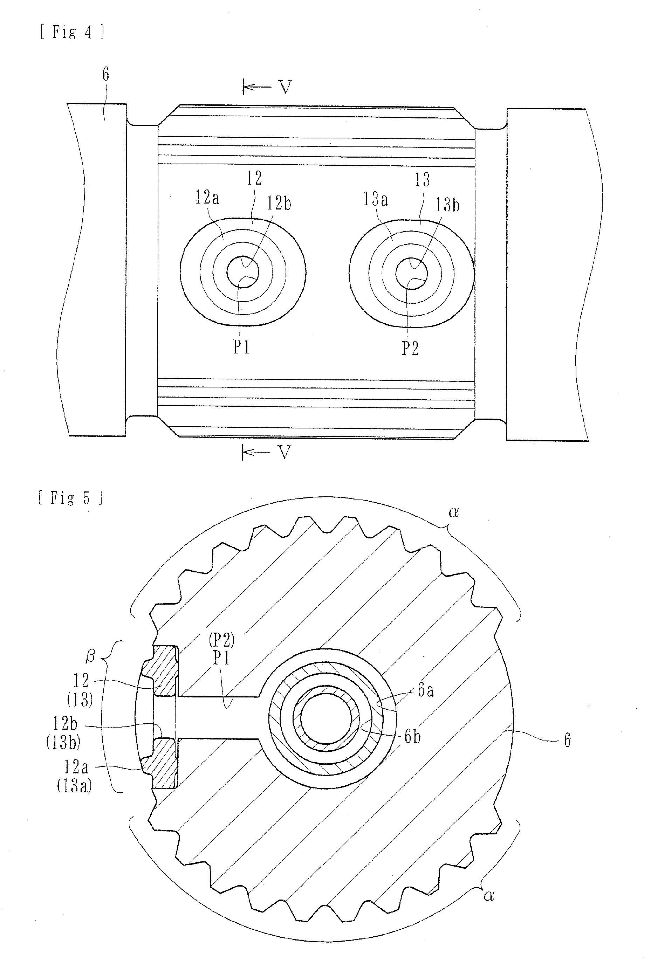

In addition, according to the present invention, the input shaft 6 is formed with a splined portion α able to be engaged with partition member 7 or 8 and a non-splined portion β in which the hydraulic oil supplying port P1, (P2) is formed, and the splined portion α and the non-splined portion β are formed on the same plane of a radial cross-section of the input shaft 6 as shown in Figs. 4 and 5. That is, the input shaft 6 is formed with the splined portion α and the non-splined portion β (in which the opening of the hydraulic oil supplying port P1, (P2) is formed) on the same plane of a radial cross-section of the input shaft 6.

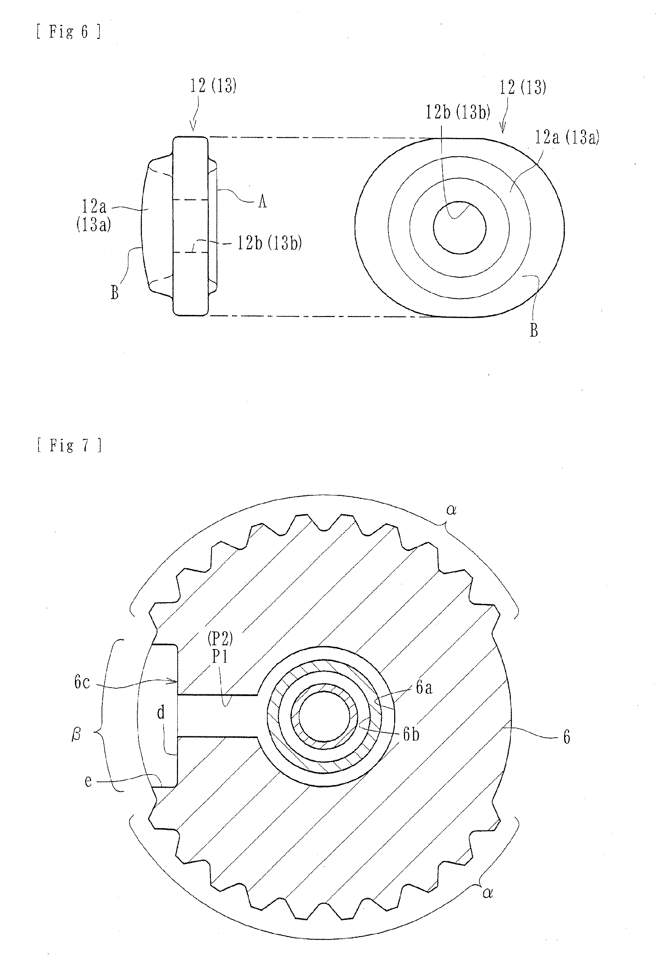

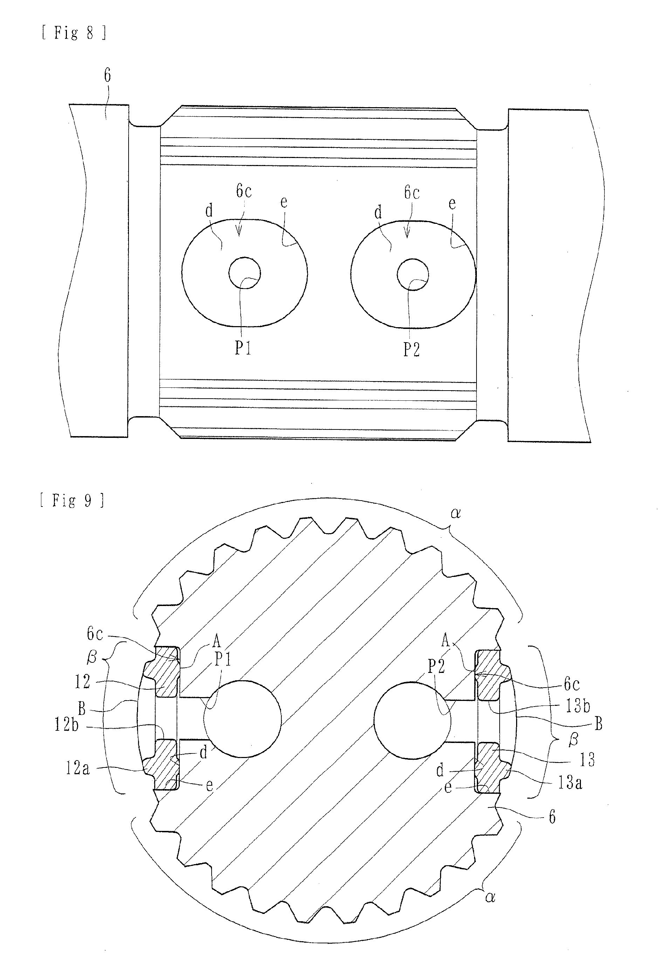

Further according to the present invention, annular sealing members 12, 13 are mounted on the outer circumference of the input shaft 6 so that they encircle the openings of the hydraulic oil supplying ports P1, P2. As shown in Figs. 7 and 8, recessed portions 6c are formed around the hydraulic oil supplying port P1, (P2) opened on the outer circumference of the input shaft 6 and each recessed portion 6c has a flattened bottom surface "d" on which the sealing member 12, 13 is seated so that its bottom surface "A" (Fig. 6) is contacted with the flattened bottom surface "d". A reference character "e" denotes a side wall of the recessed portion 6c. Accordingly, each recessed portion 6c is defined by the side wall "e" encircling each hydraulic oil supplying port P1, (P2) and the flattened bottom surface "d" in which each opening of each port P1, (P2) is formed at the center thereof.

On the other hand, the sealing member 12 or 13 has an oval outline in a plan view as shown in Fig. 6 so as to prevent the sealing member 12 or 13 from being rotated relative to the recessed portion 6c and comprises a flattened bottom surface "A" adapted to be contacted with the flattened bottom surface "d" of the recessed portion 6c and a curved top surface "B" having a curvature corresponding to that of the outer circumference of the input shaft 6. The sealing member 12, (13) can be formed of materials having sealing characteristics such as soft metal, resin or rubber etc. by molding and the curved top surface "B" is formed with contacting portion 12a, (13a) contacted with the inner circumference of the first or second partition member 7, (8) and communicating aperture 12b, (13b) for communicating with the opening of the hydraulic oil supplying port P1, (P2) passed through from the top surface "B" to the bottom surface "A" at the center thereof.

The outline configuration of the sealing member 12, (13) is substantially same as that of the recessed portion 6c formed in the input shaft 6 and can be mounted in the recessed portion 6c by press-fitting the sealing member 12, (13) into the recessed portion 6c. In the fitted condition of the sealing member 12, (13), its bottom surface "A" is contacted with the bottom surface "d" of the recessed portion 6c as shown in Fig. 9 and the top surface of the sealing member 12, (13) is positioned so that its curvature substantially corresponds to the outer circumference of the input shaft 6 to have a good sealing relative to the inner circumference of the first or second partition member 7, (8) around the hydraulic oil supplying aperture 7a, (8a).

As described above, since the annular sealing member 12, (13) are mounted on the input shaft 6 so that they encircle the openings of the hydraulic oil supplying port P1, (P2), they can independently seal the hydraulic oil supplying port P1, (P2). In addition, since the sealing member 12, (13) has the oval outline configuration, it is possible to prevent of unintentional rotation of the sealing member 12, (13) relative to the recessed portion 6c of the input shaft 6. Other outline configuration of the sealing member 12, (13) and the recessed portion 6c such as a rectangular configuration may be possible if it can prevent rotation of the sealing member relative to the recessed portion.

The gear-stage selecting means 5 comprises e.g. a microcomputer mounted on a vehicle and can control the hydraulic pressure supplied to the gear-stage clutch means 3 and arbitrarily set the gear ratio in power transmission from the engine E to the driving wheels D with selectively engaging either one of the first clutch disc group 9 or the second clutch disc group 10. Accordingly, the control means 4 and the gear-stage selecting means 5 can selectively actuate the start/speed shifting clutch means 2 and the gear-stage clutch means 3 in accordance with pre-set modes.

According to the present invention, since the recessed portions 6c having the flattened bottom surfaces "d" are formed in regions including openings of the hydraulic oil supplying ports P1, P2 on the outer circumference of the input shaft 6 as well as the sealing members 12, 13 can be press-fitted into the recessed portions 6c, it is possible to improve the power transmitting efficiency and reduce the gear shifting time lag and to easily mount the sealing members 12, 13 and thus reduce the manufacturing cost.

That is, according to the present invention, since the recessed portions 6c having the flattened bottom surfaces "d" can be easily machined without any complicated machining method required for three-dimensional machining of forming mounting groove for sealing member of the prior art, it is possible to reduce the manufacturing cost.

Since each of the sealing members 12, 13 has the flattened bottom surface "A" and the top surface "B" having the curvature corresponding to that of the circumference of the input shaft 6, it is possible to easily mold the sealing members 12, 13. In addition, since each of the sealing members 12, 13 has the outline configuration for preventing rotation of the sealing member 12, 13 relative to the recessed portion, it is possible to perform a sure sealing for a long term.

Further according to the present invention, since the input shaft 6 is formed with a splined portion α able to be spline-engaged with partition members (first and second partition members 7, 8) for forming the hydraulic chambers S1, S2 and a non-splined portion β in which the openings of the hydraulic oil supplying ports P1, P2 is formed, and the splined portion α and the non-splined portion β are formed on the same plane of a radial cross-section of the input shaft 6, it is possible to further reduce the axial dimension (i.e. height) of the power transmitting apparatus and thus the total size thereof.

Fig. 9 shows a modification of the present invention in which a plurality of hydraulic oil supplying ports P1, P2 are formed on the same plane of a radial cross-section of the input shaft 6 and annular sealing members 12, 13 are arranged around the ports 12, 13. This modification can also reduce the axial dimension of the power transmitting apparatus as compared with that having hydraulic oil supplying ports along the input shaft.

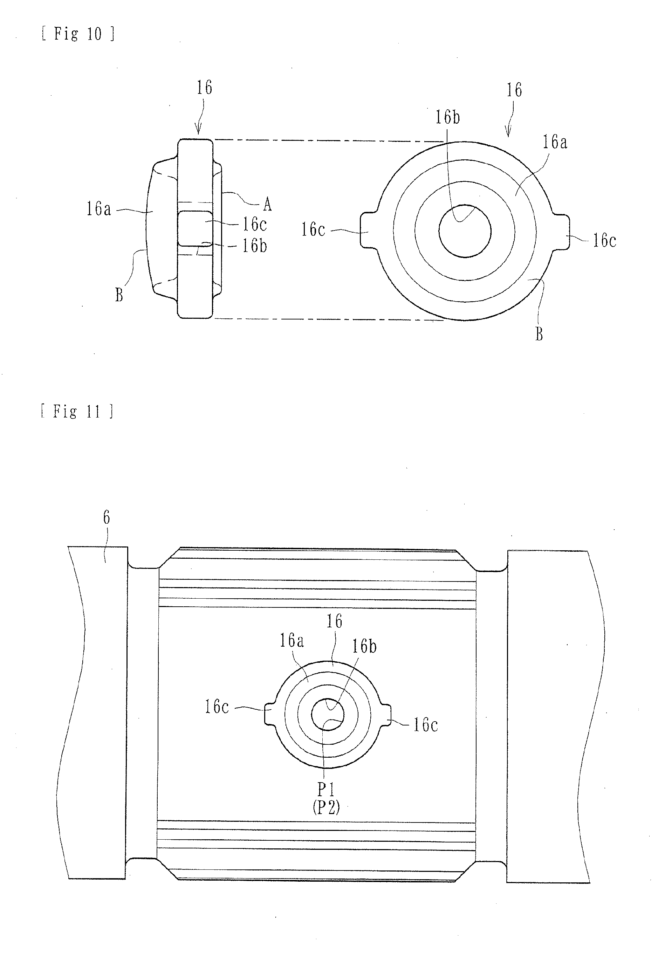

Figs. 10 and 11 show another modification of the present invention in which a sealing member 16 is integrally formed with projections 16c for preventing rotation of the sealing member 16 relative to the input shaft 6. This sealing member 16 also has the flattened bottom surface "A", the top surface "B" having a curvature corresponding to the outer circumference of the input shaft 6 and a communicating aperture 16b similar to the sealing members 12, 13 of the previously described embodiment.

Although it has described embodiments in which the splined portion α engageable with the partition members for defining the hydraulic chambers S1, S2 and the non-splined portion β formed with openings of the hydraulic oil supplying ports P1, P2 are formed on the same plane of a radial cross-section of the input shaft 6, the splined portion and the non-splined portion may be arranged along axially each other and the recessed portion for mounting the sealing member may be positioned in the non-splined portion. The structure of the present invention can be applied to other mechanical parts than the power transmitting apparatus for an automobile. Applicability in Industry

The present invention can be applied to any power transmitting apparatus in which the power can be transmitted at a predetermined gear ratio with engaging the driving clutch discs and driven clutch discs of the gear-stage clutch means of an arbitrary gear-stage by selectively supplying hydraulic oil to the hydraulic chambers, annular sealing members are arranged around the openings of the hydraulic oil supplying ports, recessed portions having flattened bottom surfaces are formed around the hydraulic oil supplying ports, and sealing members are mounted in the recessed portions, although it is one having a different external view or the other one to which any other function is added.

### Description of Reference numerals

- 1: torque converter
- 2: start/speed shifting clutch means
- 2a: first clutch means
- 2b: second clutch means
- 3: gear-stage clutch means
- 4: control means
- 5: gear-stage selecting means
- 6: input shaft
- 6c: recessed portion
- 7: first partition member
- 8: second partition member
- 9: first clutch disc group
- 10: second clutch disc group
- 11: sealing means
- 12, 13: sealing member
- 14, 15: output member
- 16: sealing member
- Pa: hydraulic piston
- d: bottom surface of recessed portion
- A: bottom surface
- B: top surface
- S1, S2: hydraulic chamber
- P1, P2: hydraulic oil supplying port

## Claims

1. A power transmitting apparatus comprising:
a gear-stage clutch means (3) arranged on the way of a power transmitting path between an engine (E) and driving wheels (D), an input from an input shaft (6) of the engine side and an output to the driving wheel side being set at a predetermined gear ratio; and
a gear-stage selecting means (5) being able to select any one of the gear ratios of the gear-stage clutch means (3) in accordance with the running condition of a vehicle and to arbitrarily set the gear ratio during power transmission from the engine (E) to the wheels (D) **characterized in:**
**that** the gear-stage clutch means comprises alternately arranged driving clutch discs (9a, 10a) and driven clutch discs (9b, 10b); a hydraulic piston (Pa) actuated by hydraulic pressure to selectively engage or disengage the driving clutch discs (9a, 10a) and driven clutch discs (9b, 10b); hydraulic chambers (S1, S2) for actuating the hydraulic piston (Pa); and hydraulic oil supplying ports (P1, P2) communicating with oil passages (6a, 6b) formed within the input shaft (6) and opening on the side surface of the input shaft (6) for supplying the hydraulic chambers (S1, S2) with hydraulic oil from the oil passages (6a, 6b) to actuate the hydraulic piston (Pa);
**that** the power can be transmitted at a predetermined gear ratio with engaging the driving clutch discs (9a, 10a) with driven clutch discs (9b, 10b) of the gear-stage clutch means (3) by selectively supplying the hydraulic chambers (S1, S2) with hydraulic oil; and
**that** an annular sealing member (12, 13, 16) is fitted in a recessed portion (6c) formed around each opening of the hydraulic oil supplying port (P1, P2) opened on the outer circumference of the input shaft (6) and the recessed portion (6c) has a flattened bottom surface (d) on which the sealing member (12, 13, 16) is seated so that it is contacted with the flattened bottom surface (d) of the recessed portion (6c).

2. A power transmitting apparatus of claim 1 wherein the annular sealing member (12, 13, 16) has a flattened bottom surface (A) adapted to be contacted with the flattened bottom surface (d) of the recessed portion (6c) and a curved top surface (B) having a curvature corresponding to that of the outer circumference of the input shaft (6).

3. A power transmitting apparatus of claim 1 or 2 wherein the sealing member (12, 13, 16) has an outline configuration or a projection for preventing rotation of the sealing member (12, 13, 16) relative to the recessed portion (6c).

4. A power transmitting apparatus of any one of claims 1 ~ 3 wherein the input shaft (6) is formed with a splined portion (α) able to be engaged with partition members (7, 8) for forming the hydraulic chambers (S1, S2) and a non-splined portion (β) in which the opening of the hydraulic oil supplying port (P1, P2) is formed, and wherein the splined portion (α) and the non-splined portion (β) are formed on the same plane of a radial cross-section of the input shaft (6).

5. A power transmitting apparatus of any one of claims 1-4 wherein a plurality of the hydraulic oil supplying ports (P1, P2) are formed on the same plane of a radial cross-section of the input shaft (6).
